# EUROPÄISCHE PATENTSCHRIFT

(11) **EP 0 911 200 B1**
(45) Veröffentlichungstag und Bekanntmachung des Hinweises auf die Patenterteilung: **09.07.2003**
(21) Anmeldenummer: 98119907.8
(22) Anmeldetag: 21.10.1998
(51) Int. Cl.: B60J 7/057, B60J 7/12, B60R 16/02

(54) **Kraftfahrzeug-Faltdachsystem sowie Verfahren zum Betreiben eines Kraftfahrzeug-Faltdachsystems**
Vehicle foldable roof system and method for operating a vehicle foldable roof system
Système de toiture pliante pour véhicule ainsi que procédé pour exploiter un système de toiture pliante pour véhicule

(30) Priorität: 27.10.1997 DE 19747326
(43) Veröffentlichungstag der Anmeldung: 28.04.1999
(73) Patentinhaber: ROBERT BOSCH GMBH, 70442 Stuttgart (DE)
(72) Erfinder: Koch, Stefan Dipl.- Ing., 77855 Achern (DE); Kremser, Rolf Dipl.-Ing. (FH), 77743 Neuried (DE); Söllner, Michael Dipl.-Ing., 77839 Lichtenau (DE); Prüllage, Arno Dipl.-Ing. (FH), 76187 Karlsruhe (DE); Millar, Rob Dipl.-Ing., Long Hanbsrough 0X8 8DQ (GB); Mitcham, Adrian Dipl.-Ing., Oxon 0X9 2 Nd (GB)

(56) Entgegenhaltungen:
- EP-A- 0 499 709
- EP-A- 0 678 643
- EP-A- 0 685 356
- DE-A- 4 205 286
- DE-A- 19 539 482
- US-A- 5 451 849
- GUNTRAM HUBER ET AL.: "Der neue Mercedes-Benz Roadster - Karosserie: Klimatisierung, Verdeck und Schliessung." ATZ AUTOMOBILTECHNISCHE ZEITSCHRIFT., Bd. 91, Nr. 6, Juni 1989, Seiten 309-318, XP000082928 STUTTGART DE
- THOMAS GANZ ET AL.: "Die Elektronik im Schiebedach als Komfortelement." ATZ AUTOMOBILTECHNISCHE ZEITSCHRIFT., Bd. 95, Nr. 11, November 1993, Seiten 592-596, XP000409589 STUTTGART DE

## Beschreibung

### Stand der Technik

Die Erfindung geht aus von einem Kraftfahrzeug-Faltdachsystem und einem Verfahren zum Betreiben eines Kraftfahrzeug-Faltdachsystems nach der Gattung der nebengeordneten Hauptansprüche.

Aus der US 5,451,849 ist bereits ein Steuersystem zur Steuerung eines Kraftfahrzeug-Faltdachsystems bekannt, das mehrere, durch elektromotorische Antriebe bewegbare Komponenten aufweist. Zu den Komponenten gehören ein Faltdach mit mehreren Bügeln, die zwischen einem voll ausgefahrenen Zustand, in dem das Faltdach das Kraftfahrzeug überdeckt, und einem voll eingefahrenen Zustand bewegbar sind, sowie einen Deckel für einen Verdeckkasten, in dem das Faltdach in geöffnetem Zustand untergebracht ist.

In dem Artikel "Der neue Mercedes-Benz Roadster - Karosserie: Klimatisierung, Verdeck und Schließung" aus der Zeitschrift ATZ 91, Seite 309 ff (Juni 1989) wird ebenfalls ein gattungsbildendes, elektrohydraulisch betätigtes Verdeck mit einem Verdecksteuergerät beschrieben, das den Bewegungsablauf beim Öffnen/Schließen des Faltdachs steuert. Beim Öffnen des Verdecks werden beispielsweise zuerst die Seitenscheiben abgesenkt, dann ggf. der Überrollbügel hinuntergefahren, dann der Stoffhaltebügel hochgestellt, dann der Verdeckkastendeckel entriegelt und hochgestellt, dann das Verdeck entriegelt und im Verdeckkasten abgelegt, sowie abschließend der Verdeckkastendeckel geschlossen und verriegelt. Dabei werden die Antriebseinheiten der Verdeckkomponenten, bzw. des Überrollbügels und der Seitenscheiben mittels mit der Steuerelektronik verbundenen Endschaltern überwacht. Außerdem ist das Verdecksteuergerät mit einem Steuergerät der Klimaanlage, einem Warnsummer und einem Türkontaktschalter verbunden. Aus diesem Artikel ist daher bekannt, dass die Funktion der Seitenscheiben und der Klimaanlage direkt vom Steuergerät des Faltverdecks angesprochen werden kann.

### Vorteile der Erfindung

Das Faltdachsystem mit den Merkmalen des Anspruchs 1 hat den Vorteil, daß der Betrieb des Faltdachsystems wie auch der externen Komponenten sicherer wird, da die signalverarbeitende Anordnung die Betriebsvorrichtungen externer Komponenten ansteuern kann, die nicht zum Faltdachsystem gehören, gleichwohl aber von seinem Zustand betroffen sind. Beispielsweise kann sie bei einer Verstellung im Bewegungsweg des Faltdachsystems liegende externe Komponenten ansteuern, um sie aus dem Bewegungsweg zu bringen. Der Zustand des Faltdachsystems umfaßt dabei insbesondere die momentane Position der Komponenten des Faltdachsystems relativ zueinander und zum Kraftfahrzeug bzw. den externen Komponenten, die Art eines auszuführenden Verstellbefehls, den physikalischen Zustand des Faltdachsystems usw.

Vorteilhafte Weiterbildungen und Ausgestaltungen des erfindungsgemäßen Faltdachsystems ergeben sich aus den vom Anspruch 1 abhängigen Ansprüchen.

Vorteilhaft erfaßt die signalverarbeitende Anordnung den Zustand der externen Komponenten. Sie ist damit in der Lage, die externen Komponenten auch zu regeln oder kann jedenfalls unnötige Beeinflussungen, z.B. weil die Komponenten bereits die für eine Verstellung des Faltdachsystems erforderliche Position haben, vermeiden.

Vom Faltdachbetrieb betroffen sind insbesondere die Komponenten Heckscheibenheizung, Seitenscheiben, Klimaanlage, Kofferraumverriegelung, Heckspoiler, Kopfstützen, Scheibenwaschfunktion und Antenne. Vorteilhaft werden diese externen Komponenten durch die signalverarbeitende Anordnung angesteuert.

In einer günstigen Ausgestaltung gibt die signalverarbeitende Anordnung ein Abschaltsignal an eine Betriebsvorrichtung der Heckscheibenheizung ab, wenn das Faltdach des Faltdachsystems nicht geschlossen ist. Die Heckscheibenheizung ist somit außer Betrieb, wenn das Faltdach das Fahrzeug nicht überdeckt. Da bei gängigen Faltdachsystemen die Heckscheibe im Faltdach eingearbeitet ist, werden Beschädigungen am Faltdach oder der Heckscheibe durch die Abschaltung vermieden.

Vorteilhaft gibt die signalverarbeitende Anordnung ein Öffnungs- oder Schließsignal an eine Betriebsvorrichtung der Seitenscheiben des Kraftfahrzeugs ab, da die Seitenscheiben beim Schließen oder Öffnen des Faltdachsystems mechanisch belastet und sogar beschädigt werden können. Besonders günstig werden die Seitenscheiben vor einer Bewegung des Faltdachsystems zumindest teilweise abgesenkt und nach Abschluß der Bewegung wieder angehoben.

Von Vorteil ist auch die Abgabe eines Abschaltsignals durch die signalverarbeitende Anordnung an eine im Kraftfahrzeug vorhandene Klimaanlage, wenn das Faltdach des Faltdachsystems nicht geschlossen ist. Da die Klimaanlage bei geöffnetem Faltdach wirkungslos ist, wird durch diese Maßnahme eine unnötige Energieverschwendung vermieden.

Vorteilhaft ist die Abgabe eines Steuersignals der signalverarbeitenden Anordnung an den beispielsweise elektrisch verstellbaren Heckspoiler zum Einfahren des selben, so daß dieser sich bei Betätigung des Faltdachs in einer sicheren Position befindet, wobei Schäden am Heckspoiler vermieden werden.

Ein weiterer Vorteil ergibt sich aus der Abgabe eines Steuersignals von der signalverarbeitenden Anordnung an die vorzugsweise elektrisch verstellbaren Kopfstützen, so daß die Kopfstützen abgesenkt werden, wenn das Faltdach geschlossen oder geöffnet wird und sich außerhalb seiner Endlagen befindet.

Ein weiterer Vorteil ergibt sich aus der Abgabe eines Steuersignals von der signalverarbeitenden Anordnung an eine Waschflüssigkeitspumpe der Scheibenwaschanlage, um das Aufbringen von Scheibenwaschflüssigkeit auf die Scheibe bei geöffnetem Faltdach und die damit verbundene mögliche Benetzung der Fahrzeuginneneinrichtung und der sich darin befindlichen Personen mit der Waschflüssigkeit zu verhindern.

Vorteilhaft ist die Abgabe eines Steuersignals von der signalverarbeitenden Anordnung an eine elektrisch verstellbare Antenne, die bei Betätigung des Faltdachs in eine Schutzposition versenkt wird. Somit besteht keine Gefahr einer Beschädigung der Antenne oder des Faltdachs durch eine gegenseitige Behinderung.

Die Steuerung externer Komponenten durch die signalverarbeitende Anordnung kann besonders wirkungsvoll erfolgen, wenn die signalverarbeitende Anordnung die Position wenigstens einer Komponente des Faltdachsystems über Positionsgeber erfassen kann. Dies erlaubt die abgestimmte Reaktion auf den momentanen Zustand des Faltdachsystems.

Vorteilhaft steuert die signalverarbeitende Anordnung darüber hinaus eine optische und/oder akustische Warneinrichtung des Faltdachsystems an, die den Benutzer auf Betriebszustände und Fehlerzustände des Faltdachsystems, aber auch der externen Komponenten hinweist.

Die Erfindung betrifft auch ein Verfahren zum Betreiben eines Kraftfahrzeug-Faltdachsystems nach dem Anspruch 14. Das Verfahren mit den Merkmalen des Anspruchs 14 hat den Vorteil, daß die externen Komponenten nicht mehr manuell beeinflußt werden müssen, sondern automatisch in einen vom Zustand des Faltdachsystems abhängigen Zustand gebracht werden. Für eine Bedienperson des Kraftfahrzeugs wird der Bedienkomfort erhöht; darüber hinaus kann das Faltdachsystem sicherer betrieben werden.

Weitere vorteilhafte Weiterbildungen und Verbesserungen des erfindungsgemäßen Faltdachsystems nach Anspruch 1 und des erfindungsgemäßen Verfahrens nach Anspruch 14 ergeben sich aus den weiteren abhängigen Ansprüchen und in Verbindung mit dem nachstehend beschriebenen Ausführungsbeispiel.

### Zeichnung

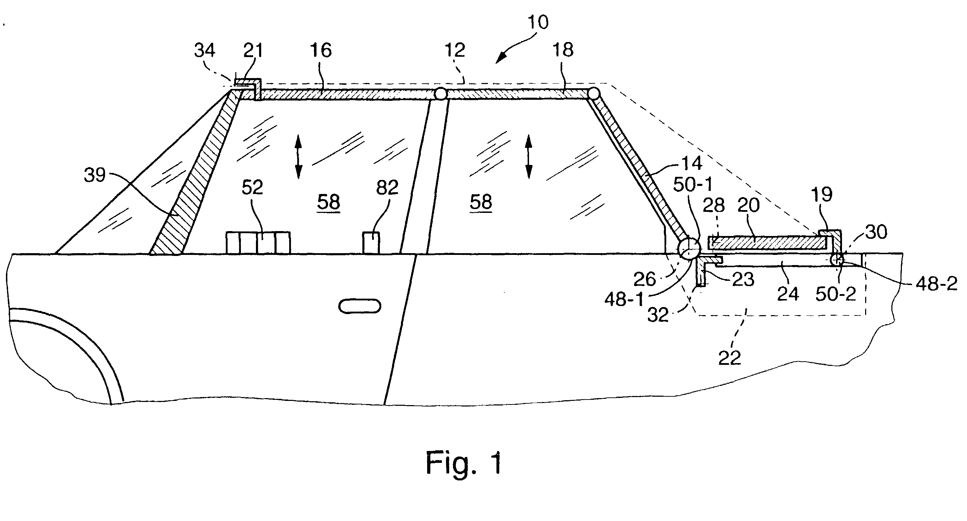

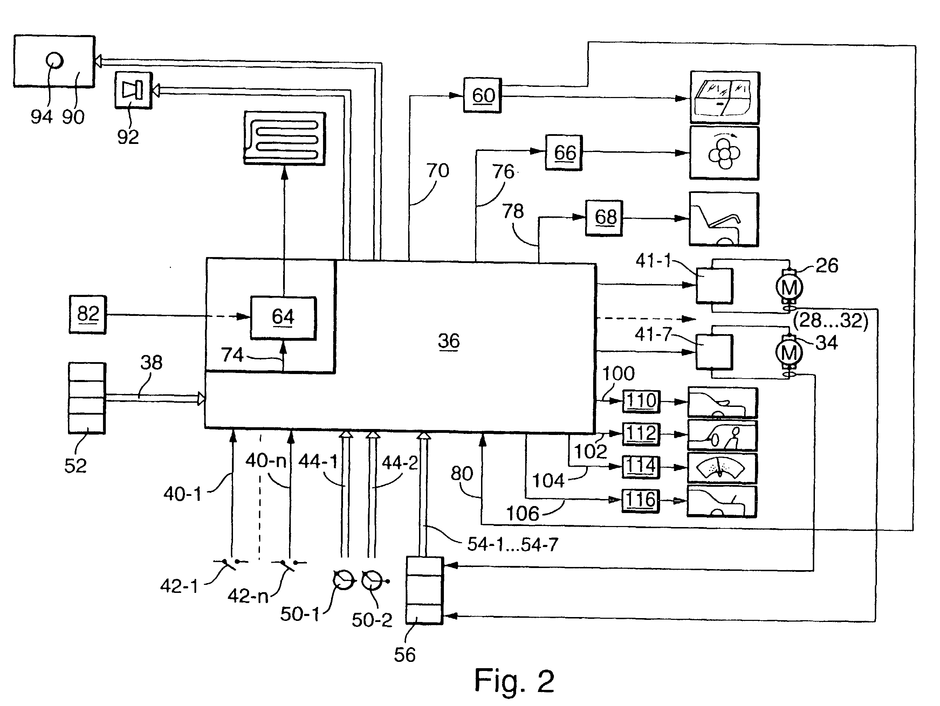

Es zeigen die Figur 1 ein erfindungsgemäßes Faltdachsystem und die Figur 2 eine Blockdiagramm zur Steuerung bzw. Regelung des Faltdachsystems sowie externer Komponenten nach Figur 1 durch eine signalverarbeitende Anordnung.

### Beschreibung der Ausführungsbeispiele

In der Figur 1 ist ein Kraftfahrzeug-Faltdachsystem 10 dargestellt, das nach den erfindungsgemäßen Verfahren betrieben wird. Das Faltdachsystem 10 weist folgende wesentliche Komponenten auf: ein Faltdach 12 mit einem Verdeckbügel 14, an dem weitere Bügel 16 und 18 gelenkig angeordnet sind, einen Spannbügel 20, einen Verdeckkasten 22 mit einem Verdeckkastendeckel 24, eine Verriegelungseinheit 21 zur Verriegelung des Faltdachs 12 an einer Windschutzscheibensäule 39, ein Schloß 23 zur Verriegelung des Verdeckkastendeckels 24, und eine hintere Verriegelungseinheit 19. Der Verdeckbügel 14 wird durch zwei elektromotorische Antriebe 26 und der Spannbügel 20 durch zwei elektromotorische Antriebe 28 beidseitig bewegt. Ein weiterer elektromotorischer Antrieb 30 öffnet und schließt den Verdeckkastendeckel 24 und vermag gleichzeitig den Spannbügel 20 mit der hinteren Verriegelungseinheit 19 zu verriegeln, ein elektromotorischer Antrieb 32 verriegelt das Schloß 23 des Verdeckkastendeckels 24, und ein Antrieb 34 verriegelt das Faltdach 12 in geschlossenem Zustand an einer Windschutzscheibensäule 39 durch Betätigung der Verriegelungseinheit 21.

Die Antriebe 26 bis 32 bestehen jeweils aus Elektromotoren mit nachgeordneten Getrieben. Anstelle der elektromotorischen Antriebe 26 bis 32 können auch andere Antriebe, beispielsweise pneumatische oder hydraulische Antriebe, zum Antrieb der Komponenten 12 bis 24 des Faltdachsystems 10 verwendet werden.

Durch geeignete Steuerung oder Regelung der Antriebe 26 bis 34 kann das mit einer Stoffplane überzogene Faltdach 12 in seine geöffnete Position gebracht werden, in der es in dem Verdeckkasten 22 versenkt ist, oder geschlossen werden. In geschlossenem Zustand ist das Faltdach 12 durch die Verriegelungseinheit 21 an der Windschutzscheibensäule 39 verriegelt und wird durch den Spannbügel 20 gespannt. Dieser Zustand ist in der Figur 1 dargestellt.

Die Steuerung oder Regelung des Faltdachsystems 10 wird durch eine in der Figur 2 dargestellte signalverarbeitende Anordnung 36 durchgeführt. Der signalverarbeitenden Anordnung 36 ist dazu ein Bediensignal 38 von Bedienschaltern 52 zugeführt, über die Stellbefehle für das Faltdachsystem 10 erteilt werden können. Ferner sind ihr Positionssignale dreier verschiedener, an dem Faltdachsystem 10 angeordneter Arten von Positionsgebern zugeführt. Dabei handelt es sich zum einen um kontinuierliche Positionssignale 44-1, 44-2. Die Positionssignale 44-1 und 44-2 werden je durch ein an einem Drehpunkt 48-1 des Verdeckbügels 14 angeordnetes Potentiometer 50-1 und ein einseitig an einem Drehpunkt 48-2 der hinteren Verriegelungseinheit 19 angeordnetes Potentiometer 50-2 erzeugt. Die Potentiometer 50-1 und 50-2 sind so ausgelegt, daß die Positionssignale 44-1 und 44-2 proportional zu dem Verstellweg der Stellteile 14 bzw. 19/24 sind, an denen sie angeordnet sind. Zweitens sind der signalverarbeitenden Anordnung 36 Positionssignale 54-1..54-7 einer Betriebsstromüberwachung 56 zugeführt, die den von den Antrieben 26 bis 34 jeweils aufgenommenen Betriebsstrom auswertet und einen High- oder Low-Pegel für den zugeordneten Antrieb abhängig davon abgibt, ob der Betriebsstrom einen Grenzwert über- oder unterschreitet. Die Grenzwerte sind so festgelegt, daß sie im normalen Motorbetrieb unterschritten und nur bei einem Blockieren des Antriebs überschritten werden; eine Auslegung im umgekehrten Sinn ist ebenfalls möglich. Sie sind darüber hinaus von der Bewegungsrichtung der Antriebe 26 bis 34 abhängig, da die Antriebe 26 bis 34 bei unterschiedlichen Bewegungsrichtungen verschieden stark belastet werden. Drittens werden an die signalverarbeitende Anordnung 36 diskrete Positionssignale 40-1...40-n von Mikroschaltern 42-1...42-n geleitet, die die Einnahme einer festgelegten Position oder eines kleinen Positionsbereichs einzelner Komponenten des Faltdachsystems 10 sensieren.

Anstelle der Verwendung von Potentiometern 50-1, 50-2 als kontinuierlichen Positionsgebern ist auch denkbar, daß Drehwinkelsensoren, beispielsweise Hallsensoren mit Magneträdern, an einem oder mehreren Antrieben 26 bis 34 als kontinuierliche Positionsgeber verwendet werden.

Über Motortreiberschaltungen 41-1..41-7 vermag die signalverarbeitende Anordnung 36 die Elektromotoren der Antriebe 26 bis 34 zu betreiben bzw. anzuhalten.

Dem Faltdachsystem 10 ferner zugeordnet sind eine optische Anzeige 90 und eine akustische Anzeige 92, die von der signalverarbeitenden Anordnung 36 angesteuert werden. Die optische Anzeige 90 signalisiert bestimmte Zustände des Faltdachsystems 12:
- eine LED 94 der optischen Anzeige 90 ist aktiv und leuchtet kontinuierlich, wenn das Faltdach 12 nicht ganz geschlossen und nicht ganz offen ist;
- die LED 94 blinkt mit niedriger Frequenz, wenn erforderliche Randbedingungen für angeforderte Bewegungen des Faltdachsystems 10 nicht erfüllt sind: so muß etwa die Handbremse angezogen sein, wenn das Faltdachsystem 10 bewegt werden soll;
- die LED 94 blinkt mit hoher Frequenz, wenn bei einer Diagnose des Faltdachsystems 10 durch die signalverarbeitende Anordnung 36 Systemfehler festgestellt werden;
- die LED 94 ist ausgeschaltet, wenn das Faltdachsystem 10 korrekt arbeitet und es vollständig geöffnet oder vollständig geschlossen ist.

Denkbar ist auch, daß zur Anzeige verschiedener Zustände unterschiedliche Farben, unterschiedliche Blinkfrequenzen, Helligkeitsmodulation, Blinkcodes (z.B. Blinkcodes, die auf die Art eines Fehlers verweisen: einmal langes, zweimal kurzes Aufleuchten = Fehler Nr. 2, entspricht einer Verstellanforderung, obwohl die Handbremse angezogen ist) alternativ oder gleichzeitig verwendet werden oder daß Meldungen in Klartext auf einem alphanumerischen Display ausgegeben werden.

Die akustische Anzeige 92 signalisiert ebenfalls verschiedene Zustände des Faltdachsystems 10:
- während des Verstellens des Faltdachsystems 10 ertönt ein Warnton, der abhängig von dem Verdeckzustand ist;
- Systemfehler werden durch mehrfache Töne angezeigt, wobei die Längenmodulation und/oder die Frequenz auf die Art des Systemfehlers hinweisen;
- ein Dauerwarnton ertönt, wenn die Geschwindigkeit des Fahrzeugs trotz eines nicht vollständig geöffneten oder geschlossenen Faltdachs einen Grenzwert überschreitet;
- kein akustisches Signal ertönt, wenn das Faltdachsystem vollständig geöffnet oder geschlossen ist und keine Fehlerbedingungen vorliegen.

Die signalverarbeitende Anordnung 36 wirkt ein auf Betriebsvorrichtungen 60, 64, 66, 68, 110, 112, 114, 116 externer Komponenten, die nicht Bestandteil des Faltdachsystems 10 sind, sondern auch in Kraftfahrzeugen ohne Faltdachsystem zum Einsatz kommen können. Im Ausführungsbeispiel handelt es sich um
- eine Betriebsvorrichtung 60, die Seitenscheiben 58 des Kraftfahrzeugs über (nicht dargestellte) elektromotorische Antriebe hebt oder senkt und die Position der einzelnen Seitenscheiben 58 über Hallsensoren in den Antrieben als Umdrehungssensoren erfaßt,
- eine Betriebsvorrichtung 64, die eine Heckscheibenheizung einer in das Faltdach 10 eingelassenen Heckscheibe betreibt,
- eine Betriebsvorrichtung 66, die eine Klimaanlage des Kraftfahrzeugs betreibt,
- eine Betriebsvorrichtung 68 für eine Kofferraumverriegelung, die einen Kofferraumdeckel des Kraftfahrzeugs ver- oder entriegelt,
- eine Betriebsvorrichtung 110, die einen Heckspoiler am Kraftfahrzeug ein- und ausfährt oder verstellt,
- eine Betriebsvorrichtung 112 für elektrisch verstellbare Kopfstützen an den Vordersitzen und/oder Rückbank im Fahrzeuginnenraum,
- eine Betriebsvorrichtung 114 für eine Waschflüssigkeitspumpe einer Scheibenwaschanlage einer Windschutzscheibe und/oder einer Heckscheibe, und
- eine Betriebsvorrichtung 116, die eine elektrisch verstellbare Antenne an der Außenseite des Kraftfahrzeugs in eine Versenkung in der Karosserie einfährt und aus dieser wieder herausfährt.

Die signalverarbeitende Anordnung 36 leitet dazu Steuersignale 70, 74, 76, 78, 100, 102, 104, 106 an die Betriebsvorrichtungen 60, 64, 66, 68, 110, 112, 114, 116 der externen Komponenten Seitenscheiben 58, Heckscheibenheizung, Klimaanlage, Kofferraumverriegelung, Heckspoiler, Kopfstützen, Scheibenwaschanlage und Antenne abhängig vom Zustand des Faltdachsystems 10. Von der Betriebsvorrichtung 60 ist der signalverarbeitenden Anordnung 36 ein Positionssignal 80 zugeführt, das ihr die Erfassung der Positionen der einzelnen Seitenscheiben 58, also des Zustands der Seitenscheiben 58, erlaubt.

Durch die Steuersignale 70, 74, 76, 78, 100, 102, 104, 106 werden die externen Komponenten in unterschiedlicher Weise beeinflußt. Bei einem Verstellvorgang des Faltdachsystems 10, beispielsweise beim Öffnen und anschließenden Absenken des Faltdachs 12 im Verdeckkasten 22, erfaßt die signalverarbeitende Anordnung 36 die Position der Seitenscheiben 58. Sind einzelne oder alle Seitenscheiben 58 geschlossen, so gibt die signalverarbeitende Anordnung ein Öffnungssignal 70 an die Bedienvorrichtung 60 ab, um die Seitenscheiben 58 abzusenken. Das Öffnungssignal 70 ist abhängig von der Position des Faltdachsystems 10 und wird abgegeben, wenn Komponenten, etwa die Bügel 14, 16 und 18, beim Zusammenfalten in die Nähe der Seitenscheiben 58 kommen und so die Gefahr einer Kollision besteht oder die Bewegung der Bügel 14, 16 und 18 durch das Absenken überhaupt erst ermöglicht wird. Ist das Faltdach 12 aus dem Bereich der Seitenscheiben 58 bewegt, wird ein Schließsignal an die Betriebsvorrichtung 60 abgegeben, bis die Seitenscheiben 58 wieder ihre ursprüngliche Position einnehmen. Im vorliegenden Ausführungsbeispiel erfolgt eine Regelung der Seitenscheiben 58, da die signalverarbeitende Anordnung 36 ihre Position erfaßt. Möglich ist jedoch auch eine zeitliche Steuerung des Absenkvorgangs.

Bei Eintreffen eines Stellbefehls zum Öffnen des Faltdachs 12 gibt die signalverarbeitende Anordnung 36 ferner ein Abschaltsignal 74 an die Betriebsvorrichtung 64 der Heckscheibenheizung, so daß die Heckscheibenheizung außer Betrieb gesetzt wird. Ist das Faltdach 12 geöffnet, so wird durch das Abschaltsignal 74 der Betrieb der Heckscheibenheizung gesperrt. Die Bedienvorrichtung 64 der Heckscheibenheizung ist im Gegensatz zu den anderen Bedienvorrichtungen 60, 66, 68, 110, 112, 114 und 116 in der signalverarbeitenden Anordnung 36 integriert. Die Heckscheibenheizung kann manuell über einen Bedienschalter 82 ein- und ausgeschaltet werden, falls nicht das Abschaltsignal 74 an der Bedienvorrichtung 64 anliegt. In diesem Fall registriert die Bedienvorrichtung 64 die Schalterbetätigung, führt einen Einschaltbefehl aber erst aus, wenn das Abschaltsignal 74 nicht mehr anliegt. Hier wie auch in den anderen Fällen der Ansteuerung externer Komponenten kann natürlich auch der komplementäre Fall realisiert sein, d.h. die signalverarbeitende Anordnung gibt ein Anschaltsignal bei geschlossenem Faltdach 12 an die Bedienvorrichtung 64 ab und nimmt das Anschaltsignal zurück, wenn das Faltdach 12 geöffnet ist oder wird.

Ähnlich wird auch der Betrieb der Klimaanlage gesperrt, wenn das Faltdach 12 nicht geschlossen ist, indem die signalverarbeitende Anordnung 36 ein Verriegelungssignal 76 an die Betriebsvorrichtung 66 der Klimaanlage abgibt.

Desweiteren wird die Kofferraumverriegelung des Kofferraums des Kraftfahrzeugs gegen eine Entriegelung versperrt, wenn das Faltdachsystem 10 in Bewegung ist und nicht vollständig geöffnet oder geschlossen ist. Dies ist aufgrund des mechanischen Aufbaus des Faltfachsystems erforderlich. Dazu gibt die signalverarbeitende Anordnung 36 ein Sperrsignal 78 an die Betriebsvorrichtung 68 der Kofferraumverriegelung ab.

Weiterhin wird der ausgefahrene Heckspoiler eingefahren oder verstellt, wenn das Faltdachsystem 10 in Bewegung ist und nicht vollständig geöffnet oder geschlossen ist. Dazu wird ein Verstellsignal 100 von der signalverarbeitenden Anordnung 36 an die Betriebsvorrichtung 110 des Heckspoilers abgegeben.

Prinzipiell ähnlich funktioniert die Ansteuerung der elektrisch verstellbare Kopfstützen. Bei Inbetriebnahme des Faltdachsystems 10 und Bewegung des Faltdachs 12 werden die Kopfstützen so weit wie möglich abgesenkt und aus dem Bewegungsbereich des Faltdachs 12 entfernt, indem die signalverarbeitende Anordnung 36 ein Absenksignal 102 an die Betriebsvorrichtung 112 für die Kopfstützen abgibt.

Bei der Scheibenwaschanlage mit einer Waschflüssigkeitspumpe, die die Waschflüssigkeit auf eine Scheibe aufbringt, vorzugsweise Front- und/oder Heckscheibe, wird während des Betriebs des Faltdachsystems 10 und in geöffnetem Zustand des Faltdachs 12 von der signalverarbeitenden Anordnung 36 ein Deaktivierungssignal 104 an die Betriebsvorrichtung 114 der Scheibenwaschanlage zugeführt, um die Pumpe zu deaktivieren. Bei geschlossenem Faltdach 12 ist die Schweibenwaschanlage aktiviert, so daß bei Bedarf der Fahrer oder eine automatische Wisch-/Waschfunktion, beispielsweise ein Regensensor, den Waschbetrieb auslöst und die Scheibe gereinigt wird.

Schließlich gibt die signalverarbeitende Anordnung 36 eine Stellsignal 106 an die Betriebsvorrichtung 116 der elektrisch verstellbaren Antenne, insbesondere Empfangsund/oder Sendeantenne. Bei Betrieb des Faltdachsystems 10 wird das Faltdach 12 bewegt und die Antenne eingefahren. Ansonsten ist sie üblicherweise, insbesondere bei aktiviertem Zündschloß, ausgefahren. Dadurch wird das mögliche Verheddern des Faltdachs 12 mit der Antenne, z.B. bei stärkerem Wind, und eine Beschädigung des Faltdachs 12 und/oder der Antenne vermieden.

## Patentansprüche

1. Faltdachsystem für ein Kraftfahrzeug, mit einer signalverarbeitenden Anordnung (36) zur Erfassung von Stellbefehlen und zur Steuerung und/oder Regelung von Antriebsmitteln (26 bis 34) für das Faltdachsystem (10) abhängig von den Stellbefehlen, **dadurch gekennzeichnet, daß** die signalverarbeitende Anordnung (36) vom Zustand des Faltdachsystems (10) abhängige Steuersignale (70, 74, 76, 78, 100, 102, 104, 106) an wenigstens eine Betriebsvorrichtung (60, 64, 66, 68, 110, 112, 114, 116) einer Heckscheibenheizung und/oder einer Kofferraumverriegelung und/oder eines Heckspoilers und/oder wenigstens einer Kopfstütze und/oder einer Scheibenwaschanlage und/oder einer Antenne abgibt.

2. Faltdachsystem nach Anspruch 1, **dadurch gekennzeichnet, daß** die signalverarbeitende Anordnung (36) den Zustand der Heckscheibenheizung und/oder der Kofferraumverriegelung und/oder des Heckspoilers und/oder der wenigstens einen Kopfstütze und/oder der Scheibenwaschanlage und/oder der Antenne erfaßt.

3. Faltdachsystem nach einem der Ansprüche 1 oder 2, **dadurch gekennzeichnet, daß** die signalverarbeitende Anordnung (36) ein Abschaltsignal (74) an eine Betriebsvorrichtung (64) der Heckscheibenheizung abgibt, wenn das Faltdach (12) des Faltdachsystems (10) nicht geschlossen ist.

4. Faltdachsystem nach einem der vorhergehenden Ansprüche, **dadurch gekennzeichnet, daß** die signalverarbeitende Anordnung (36) ein Sperrsignal (78) als Steuersignal an eine Betriebsvorrichtung der Kofferraumverriegelung abgibt.

5. Faltdachsystem nach einem der vorhergehenden Ansprüche, **dadurch gekennzeichnet, daß** die signalverarbeitende Anordnung (36) ein Verstellsignal (100) zum Einfahren des Heckspoilers an eine Betriebsvorrichtung (110) des Heckspoilers abgibt, wenn das Faltdach (12) des Faltdachsystems (10) in Bewegung ist.

6. Faltdachsystem nach einem der vorhergehenden Ansprüche, **dadurch gekennzeichnet, daß** die signalverarbeitende Anordnung (36) ein Absenksignal (102) an eine Betriebsvorrichtung (112) der verstellbaren Kopfstützen abgibt, wenn das Faltdach (12) des Faltdachsystems (10) in Bewegung ist.

7. Faltdachsystem nach einem der vorhergehenden Ansprüche, **dadurch gekennzeichnet, daß** die signalverarbeitende Anordnung (36) ein Deaktivierungssignal (104) an eine Betriebsvorrichtung (114) der Scheibenwaschanlage abgibt, wenn das Faltdach (12) nicht geschlossen ist.

8. Faltdachsystem nach einem der vorhergehenden Ansprüche, **dadurch gekennzeichnet, daß** die signalverarbeitende Anordnung (36) ein Stellsignal (106) an eine Betriebsvorrichtung (116) der Antenne abgibt, wenn das Faltdach (12) des Faltdachsystems (10) in Bewegung ist.

9. Faltdachsystem nach einem der vorhergehenden Ansprüche, **dadurch gekennzeichnet, daß** die Position wenigstens einer Komponente (12 bis 24) des Faltdachsystems (10) über Positionsgeber (42-1..42-n, 50-1, 50-2, 56) durch die signalverarbeitende Anordnung (36) erfaßbar ist.

10. Faltdachsystem nach Anspruch 9, **dadurch gekennzeichnet, daß** wenigstens ein Positionsgeber (50-1, 50-2) die Position einer Komponente (14, 19/24) des Faltdachsystems (10) kontinuierlich erfaßt.

11. Faltdachsystem nach Anspruch 10, **gekennzeichnet durch** ein an einem Drehpunkt (48-1, 48-2) der Komponente (14, 19/24) des Faltdachsystems (10) angeordnetes Potentiometer (50-1, 50-2) als Positionsgeber.

12. Faltdachsystem nach einem der vorhergehenden Ansprüche, **dadurch gekennzeichnet, daß** die signalverarbeitende Anordnung (36) gleichzeitig die Betriebsvorrichtung (64) für die Heckscheibenheizung und/oder die Kofferraumverriegelung und/oder den Heckspoiler und/oder die wenigstens eine Kopfstütze und/oder die Scheibenwaschanlage und/oder die Antenne bildet.

13. Faltdachsystem nach einem der vorhergehenden Ansprüche, **dadurch gekennzeichnet, daß** die signalverarbeitende Anordnung (36) eine optische und/oder akustische Warneinrichtung (90, 92) des Faltdachsystems (10) ansteuert.

14. Verfahren zum Betreiben eines Kraftfahrzeug-Faltdachsystems (10), das durch eine signalverarbeitende Anordnung (36) abhängig von Stellbefehlen über Antriebsmittel (26 bis 34) verstellt wird, **dadurch gekennzeichnet, daß**
von der signalverarbeitenden Anordnung (36) der Betrieb einer Heckscheibenheizung gesperrt und/oder eine Scheibenwaschanlage desaktiviert wird, wenn das Faltdach (12) des Faltdachsystems (10) nicht geschlossen ist und/oder eine Kofferraumentriegelung gesperrt und/oder
ein Heckspoiler eingefahren oder verstellt und/oder mindestens eine Kopfstütze eingefahren und/oder eine Antenne verstellt wird, wenn das Faltdachsystem (10) bewegt wird.

15. Verfahren nach Anspruch 14, **dadurch gekennzeichnet, daß** ein optisches und/oder akustisches Warnsignal abgegeben wird, wenn ein Fehlerzustand erkannt wird.

16. Verfahren nach Anspruch 14 oder 15, **dadurch gekennzeichnet, daß** die Bewegung des Faltdachsystems (10) beeinflußt wird, wenn vorbestimmbare Zustände weiterer Komponenten eingenommen sind.

## Claims

1. Folding roof system for a motor vehicle, having a signal-processing arrangement (36) for picking up actuation instructions and for controlling and/or regulating drive means (26 to 34) for the folding-roof system (10) as a function of the actuation instructions, **characterized in that** the signal-processing arrangement (36) outputs control signals (70, 74, 76, 78, 100, 102, 104, 106), which are dependent on the state of the folding-roof system (10), to at least one operating device (60, 64, 66, 68, 110, 112, 114, 116) of a rear-window heating system and/or of a luggage-compartment locking system and/or of a rear spoiler and/or of at least one headrest and/or of a window-washing system and/or of an antenna.

2. Folding-roof system according to Claim 1, **characterized in that** the signal-processing arrangement (36) senses the state of the rear-window heating system and/or of the luggage-compartment locking system and/or of the rear spoiler and/or of the at least one headrest and/or of the window-washing system and/or of the antenna.

3. Folding-roof system according to one of Claims 1 or 2, **characterized in that** the signal-processing arrangement (36) outputs a switch-off signal (74) to an operating device (64) of the rear-window heating device if the folding roof (12) of the folding-roof system (10) is not closed.

4. Folding-roof system according to one of the preceding claims, **characterized in that** the signal-processing arrangement (36) outputs a disable signal (78) as a control signal to an operating device of the luggage-compartment locking system.

5. Folding-roof system according to one of the preceding claims, **characterized in that** the signal-processing arrangement (36) outputs an adjustment signal (100) for the retraction of the spoiler to an operating device (110) of the rear spoiler if the folding roof (12) of the folding-roof system (10) is moving.

6. Folding-roof system according to one of the preceding claims, **characterized in that** the signal-processing arrangement (36) outputs a lowering signal (102) to an operating device (112) of the adjustable headrests if the folding roof (12) of the folding-roof system (10) is moving.

7. Folding-roof system according to one of the preceding claims, **characterized in that** the signal-processing arrangement (36) outputs a deactivation signal (104) to an operating device (114) of the window-washing system if the folding roof (12) is not closed.

8. Folding-roof system according to one of the preceding claims, **characterized in that** the signal-processing arrangement (36) outputs an actuation signal (106) to an operating device (116) of the antenna if the folding roof (12) of the folding-roof system (10) is moving.

9. Folding-roof system according to one of the preceding claims, **characterized in that** the position of at least one component (12 to 24) of the folding-roof system (10) can be sensed by the signal-processing arrangement (36) by means of position sensors (42-1..42-n, 50-1, 50-2, 56).

10. Folding-roof system according to Claim 9, **characterized in that** at least one position sensor (50-1, 50-2) continuously senses the position of a component (14, 19/24) of the folding roof-system (10).

11. Folding-roof system according to Claim 10, **characterized by** a potentiometer (50-1, 50-2) as position sensor, said potentiometer (50-1, 50-2) being arranged at a pivot point (48-1, 48-2) of the component (14, 19/24) of the folding-roof system (10).

12. Folding-roof system according to one of the preceding claims, **characterized in that** the signal-processing arrangement (36) simultaneously forms the operating device (64) for the rear-window heating system and/or the luggage-compartment locking system and/or the rear spoiler and/or the at least one headrest and/or the window-washing system and/or the antenna.

13. Folding-roof system according to one of the preceding claims, **characterized in that** the signal-processing arrangement (36) actuates a visual and/or audible warning device (90, 92) of the folding-roof system (10).

14. Method for operating a motor-vehicle folding-roof system (10) which is adjusted by a signal-processing arrangement (36) as a function of actuation instructions using drive means (26 to 34), **characterized in that** the signal-processing arrangement (36) disables the operation of a rear-window heating system and/or deactivates a window-washing system if the folding roof (12) of the folding-roof system (10) is not closed and/or a luggage-compartment release system is disabled and/or a rear spoiler is retracted or adjusted and/or at least one headrest is retracted and/or an antenna is adjusted if the folding-roof system (10) is moved.

15. Method according to Claim 14, **characterized in that** a visual and/or audible warning signal is output if a fault state is detected.

16. Method according to Claim 14 or 15, **characterized in that** the movement of the folding-roof system (10) is influenced if predeterminable states of further components are assumed.

## Revendications

1. Système de toit pliant pour un véhicule automobile avec un dispositif (36) traitant des signaux destiné à enregistrer des ordres de positionnement et à commander et/ou à régler des moyens d'entraînement (26 à 34) pour le système de toit (10) en fonction des ordres de positionnement,
**caractérisé en ce que**
le dispositif (36) traitant des signaux fournit des signaux de commande (70, 74, 76, 78, 100, 102, 104, 106) en fonction de l'état du système de toit (10) à au moins un dispositif de fonctionnement (60, 64, 66, 68, 110, 112, 114, 116) d'un chauffage de lunette arrière et/ou d'un verrouillage de coffre à bagages et/ou d'un becquet et/ou au moins un appuie-tête et/ou d'une installation de lavage de vitres et/ou d'une antenne.

2. Système de toit pliant selon la revendication 1,
**caractérisé en ce que**
le dispositif (36) traitant des signaux enregistre l'état du chauffage de lunette arrière et/ou du verrouillage de coffre à bagages et/ou du becquet et/ou l'au moins un appuie-tête et/ou de l'installation de lavage de vitres et/ou de l'antenne.

3. Système de toit pliant selon l'une des revendications 1 ou 2,
**caractérisé en ce que**
le dispositif (36) traitant des signaux fournit un signal de déconnexion (74) à un dispositif de fonctionnement (64) du chauffage de lunette arrière lorsque le toit pliant (12) du système de toit pliant (10) n'est pas fermé.

4. Système de toit pliant selon l'une des revendications précédentes,
**caractérisé en ce que**
le dispositif (36) traitant des signaux fournit un signal d'arrêt (78) en tant que signal de commande à un dispositif de fonctionnement du verrouillage de coffre à bagages.

5. Système de toit pliant selon l'une des revendications précédentes,
**caractérisé en ce que**
le dispositif (36) traitant des signaux fournit un signal de déplacement (100) pour rentrer le becquet à un dispositif de fonctionnement (110) du becquet lorsque le toit pliant (12) du système de toit pliant (10) est en mouvement.

6. Système de toit pliant selon l'une des revendications précédentes,
**caractérisé en ce que**
le dispositif (36) traitant des signaux fournit un signal d'abaissement (102) à un dispositif de manoeuvre (112) des appuie-tête mobiles lorsque le toit pliant (12) du système de toit pliant (10) est en mouvement.

7. Système de toit pliant selon l'une des revendications précédentes,
**caractérisé en ce que**
le dispositif (36) traitant des signaux fournit un signal de désactivation (104) à un dispositif de manoeuvre (114) de l'installation de lavage de vitres lorsque le toit pliant (12) n'est pas fermé.

8. Système de toit pliant selon l'une des revendications précédentes,
**caractérisé en ce que**
le dispositif (36) traitant des signaux fournit un signal de réglage (106) à un dispositif de manoeuvre (116) de l'antenne lorsque le toit pliant (12) du système de toit pliant (10) est en mouvement.

9. Système de toit pliant selon l'une des revendications précédentes,
**caractérisé en ce que**
la position d'au moins un composant (12 à 24) du système de toit pliant (10) peut être enregistrée au moyen de capteurs de position (42-1, ..., 42-n, 50-1, 50-2, 56) par le dispositif (36) traitant des signaux.

10. Système de toit pliant selon la revendication 9,
**caractérisé en ce qu'**
au moins un capteur de position (50-1, 50-2) enregistre continuellement la position d'un composant (14, 19/24) du système de toit pliant (10).

11. Système de toit pliant selon la revendication 10,
**caractérisé par**
un potentiomètre (50-1, 50-2) disposé à un point de rotation (48-1, 48-2) du composant (14, 19/24) du système de toit pliant (10).

12. Système de toit pliant selon l'une des revendications précédentes,
**caractérisé en ce que**
le dispositif (36) traitant des signaux forme simultanément le dispositif de manoeuvre (64) pour le chauffage de lunette arrière et/ou le verrouillage de coffre à bagages et/ou le becquet et/ou l'au moins un appuie-tête et/ou l'installation de lavage de vitres et/ou l'antenne.

13. Système de toit pliant selon l'une des revendications précédentes,
**caractérisé en ce que**
le dispositif (36) traitant des signaux commande une installation d'avertissement (90, 92) optique et/ou acoustique du système de toit pliant (10).

14. Procédé pour manoeuvrer un système de toit pliant de véhicule (10) déplacé par un dispositif (36) traitant des signaux en fonction d'ordres de positionnement grâce à des moyens d'entraînement (26 à 34),
**caractérisé en ce que**
le fonctionnement d'un chauffage de lunette arrière est arrêté et/ou une installation de lavage de vitres est désactivée lorsque le toit pliant (12) du système de toit pliant (10) n'est pas fermé et/ou un verrouillage de coffre à bagages est bloqué et/ou un becquet est rentré ou déplacé et/ou au moins un appuie-tête est rentré et/ou une antenne est déplacée lorsque le système de toit pliant (10) est déplacé.

15. Procédé selon la revendication 14,
**caractérisé en ce qu'**
un signal d'avertissement optique et/ou acoustique est émis lorsqu'un état d'erreur est reconnu.

16. Procédé selon la revendication 14 ou 15,
**caractérisé en ce qu'**
on agit sur le mouvement du système de toit pliant (10) lorsque des états prédéterminables d'autres composants sont détectés.
